# EUROPEAN PATENT APPLICATION

(11) **EP 2 034 648 A1**
(43) Date of publication of application: **11.03.2009**
(21) Application number: 07017666.4
(22) Date of filing: 10.09.2007
(51) Int. Cl.: H04J 14/02, H04K 1/02, H04K 3/00

(54) **Method to secure the upstream data transmission in an optical network**

(71) Applicant: Nokia Siemens Networks Oy, 02610 Espoo (FI)
(72) Inventor: Hajduczenia, Marek, 4505-314 Fiaes (PT); Inacio, Pedro Ricardo Morais, 6200-230 Aldeia de Carvalho (PT); Monteiro, Paulo, 3930-209 Ilhavo (PT); Morais, Rui, 2795-048 Linda-a-Velha (PT)
(74) Representative: Bruglachner, Thomas E.

(57) **Abstract**

The invention is related to A method to secure a confidential data transmission in the upstream direction of a point-to-multipoint optical network of optical lines, on which the data is transmitted upstream and downstream in different wavelength ranges (λd, λu), said optical network comprising an optical line terminal (OLT), at least one splitter (SP) and multiple optical network units (ONU), **characterized in that** an additional disturbing signal (λt) is emitted downstream with a wavelength in the range of the upstream data transmission which superimposes with unwanted downstream reflections (λr) of the upstream data transmission.

## Description

The invention is related to a method to secure a confidential data transmission in the upstream direction of a point-to-multipoint optical network of optical lines, on which the data is transmitted upstream and downstream in different wavelength ranges, said optical network comprising an optical line terminal, at least one splitter and multiple optical network units.

Passive optical networks are low cost access networks that provide means to deliver telecommunication signals from a central office via an Optical Line Terminal OLT to subscribers near Optical Network Units ONU. The direction from the central office to the subscribers is called downstream while the reverse direction is called upstream. Since a single OLT is connected to several ONUs through a complete passive optical infrastructure, the downstream communication is of the point-to multipoint type, which means that all ONUs connected to the OLT receive the same signal emitted by the OLT. Upstream communication is of the point to point type, as all signals from the ONUs are merely combined together in the splitters. This requires channel sharing, which is usually done by a time division multiplexing mechanism.

To secure the downstream data transmission usually data encryption mechanisms are used, thus only the ONU with the correct key has the capability to decrypt the received packets and extract useful information. On the other hand, the upstream communication is assumed to be secure due to its point-to-point properties and thus no additional security means are currently applied there. Nevertheless, security can be an issue since there can occur unwanted spurious reflections at optical connections in the upstream direction leading to a security threat.

In principle, the ONU receiver is tuned to the downstream transmission wavelength. However, a malicious user may easily prepare an ONU to detect signals transmitted at the upstream wavelength. So a malicious user may be capable of eavesdropping upstream communications originating from other ONUs in the network by detecting the unwanted reflections of the upstream signal in downstream direction.

Privacy and confidentiality might be lost if the network operation relies on assumed upstream signal security properties.

Downstream data signal encryption, preventing eavesdropping by other ONUs, is significantly easier to implement providing that the upstream channel is immune to eavesdropping. In the case of a non-secure upstream channel, the key exchange mechanisms required need to be inherently more complicated. This leads to overhead and undesired consumption of processing capacity and consequently to more expensive equipment.

In the international patent application WO 2005/032024 A1 a method and system for secure upstream transmission in optical networks is described, which aims to solve the problem of unwanted signal reflections. This application proposes to place disturbing reflectors along the upstream channel in order to deliberately produce reflections. The combination of the produced reflections with the unwanted reflections of the upstream signal can make it impossible to decode the upstream data signal by any malicious ONU. This method requires reflectors to be distributed along the optical lines, which will be expensive and requires the intervention of highly skilled technicians. Additionally, a malicious user can locate the disturbing reflectors by sending, for example, a short pulse in the upstream direction and detecting its reflections. With this information the mentioned user can try to decode the obtainable upstream signal reflections through a correlation process, providing that the interference between individual reflections is not coherent.

It is the objective of this invention to solve the above mentioned problems and to propose a secure upstream data transmission without additional equipment in the splitters or at the optical lines.

This is achieved by the method of claim 1 and the network features of claim 9.

Embodiments of the invention are shown in the dependent claims.

The proposed method is applied to a point-to-multipoint optical network of optical lines, on which the data is transmitted upstream and downstream in different wavelength ranges. The optical network comprises an optical line terminal OLT, at least one splitter and multiple optical network units ONU. The method uses an additional disturbing signal which is generated at the OLT level and emitted into the downstream direction at a wavelength within the upstream wavelength range, which superimposes with unwanted downstream reflections of the upstream data transmission. The application of a disturbing signal degrades the downstream reflections of the upstream signal to a level where no data can be recovered from the originating noise, regardless of the applied detection means.

The disturbing signal transmitter may be placed at the OLT or in the optical line to the first splitter. Some types of first splitters have also a parallel input line, at which the disturbing signal may also be placed. These configurations lead to the protection of the whole optical network.

The disturbing signal optical transmitter can be any optical source, suitable for the required wavelength. Among the possible transmitters is a Light Emitting Diode LED, a Super Luminescent Diode SLD or a semiconductor Optical Amplifier SOA.

The effect of disturbing the reflected upstream signals can be optimised by tuning the wavelength of the disturbing signal in the upstream range, thus allowing for dynamic adaptation to the particular optical network conditions.
The effect can further be optimised by adjusting the power of the disturbing signal. The disturbing signal reaching each ONU must always be high enough to make signal detection and processing impossible. On the other hand, the disturbing signal power must always be below the threshold where the lasers of the ONUs become instable. Calculations have shown that in practical networks the output power of the disturbing signal shall be in the range of -7dBm to -22dBm.

In one execution of the method the disturbing signal is applied continuous.

In another execution of the method the disturbing signal is applied only during security sensitive network operations, such as network recovery or key exchanging events.

Additionally, the disturbing signal may carry randomized data sequences.

The proposed method and network fulfils the objective of securing upstream communications. It adds no proportional cost to the number of network subscribers. The cost of the additional transmitter is shared between all subscribers.
The transmitter can be placed inside the OLT, at the OLT or as a separate module, what ever is convenient.

This solution eliminates all manual work related to field employment of measures to secure the upstream network communication. The maintenance can be performed remotely and is limited to making sure that the transmitter of the disturbing signal is operating within its tolerance parameters.

The proposed method can be introduced in already deployed optical networks without the need of physical changes in the network.

The figures depict the preferred embodiments of the invention.
Fig. 1 shows the network structure.
Fig. 2 shows a part of the network with a separate transmitter.

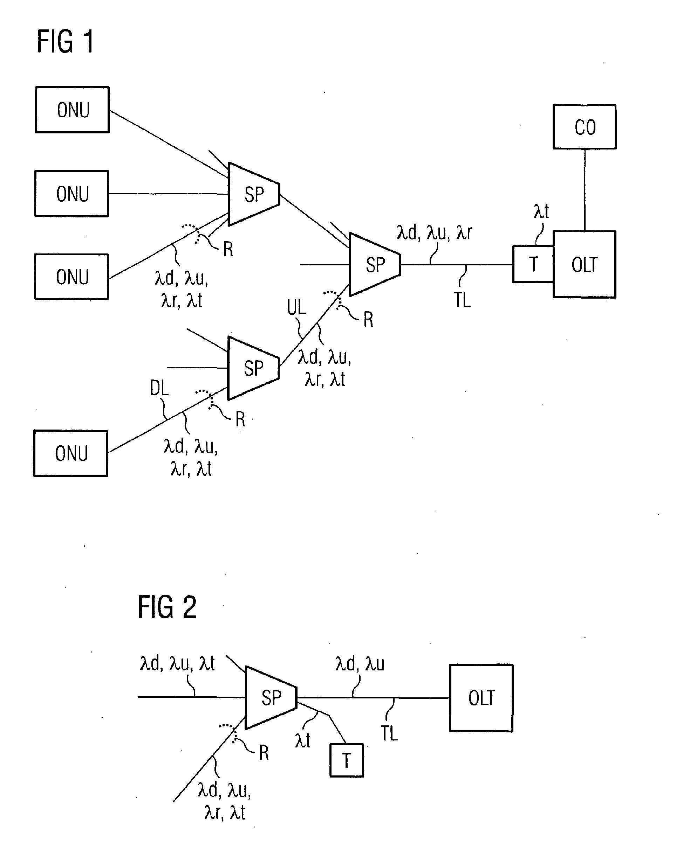

In Fig. 1 a typical passive optical network in a tree configuration is shown. It consists of multiple optical network units ONU at the subscriber sites connected to optical splitters and combiners SP via downstream lines DL. The direction to the optical line terminal OLT is connected via the upstream line UL. The first splitter SP is connected via the trunk line TL to the optical line terminal OLT. The network is controlled by the control system CO, which is connected to the optical line terminal OLT.

The communication is splitted in upstream and downstream data signals in the according wavelengths λu and λd. These wavelengths do not overlap.

In some points in the network reflections R of the upstream data signal can occur. This can be at splices, splitters or the like. These reflections produce the unwanted reflected signal λr, which can be detected and decoded by a malicious ONU. To prevent this detection and decoding a disturbing signal with the wavelength λt in the upstream range is emitted downstream from the transmitter T to all optical network units ONU. This disturbing signal superimposes the reflected upstream signal λr, thus making it impossible to detect and decode the reflected signal λr at a malicious ONU.
The transmitter T can be a located at the optical line terminal OLT or integrated in it.

Fig. 2 shows a part of the optical network similar to the network of fig. 1. Here the disturbing signal λt is not emitted into the trunk line TL, but the transmitter T uses an additional input line to the first Splitter SP. The reflected signal λr from the reflection point R is superimposed in the same way with the disturbing signal λt.

### References

- CO: Control System
- DL: Downstream Line
- OLT: Optical Line Terminal
- ONU: Optical Network Unit
- R: Reflection
- SP: Optical Splitter
- TL: Trunk Line
- UL: Upstream Line
- λd: Wavelength Downstream signal
- λr: Wavelength reflected signal
- λt: Wavelength disturbing signal
- λu: Wavelength Upstream signal

## Claims

1. A method to secure a confidential data transmission in the upstream direction of a point-to-multipoint optical network of optical lines, on which the data is transmitted upstream and downstream in different wavelength ranges (λd, λu), said optical network comprising an optical line terminal (OLT), at least one splitter (SP) and multiple optical network units (ONU), **characterized in that** an additional disturbing signal (λt) is emitted downstream with a wavelength in the range of the upstream data transmission which superimposes with unwanted downstream reflections (λr) of the upstream data transmission.

2. A method according to claim 1, **characterized in that** the wavelength (λt) of the disturbing signal is tuneable.

3. A method according to claim 1, **characterized in that** the power of the emitted disturbing signal is adjustable.

4. A method according to claim 1, **characterised in that** the disturbing signal is emitted with a power of -7dBm to -22dBm.

5. A method according to claim 1, **characterized in that** the disturbing signal is applied continuous.

6. A method according to claim 2, **characterized in that** the disturbing signal is applied only during security sensitive network operations.

7. A method according to claim 1, **characterized in that** the disturbing signal is emitted with a constant amplitude.

8. A method according to claim 1, **characterized in that** the disturbing signal carries randomized data sequences.

9. An optical network of the point-to-multipoint type, on which the data is transmitted upstream and downstream in different wavelength ranges (λd, λu), said optical network comprising an optical line terminal OLT), at least one splitter (SP) and multiple optical network units (ONU), **characterized in that** an additional disturbing signal is emitted downstream with a wavelength (λt) in the range of the upstream data transmission which superimposes with unwanted downstream reflections of the upstream data transmission to secure the transmission of confidential data in the upstream direction.

10. A network according to claim 9, **characterized in that** the disturbing signal is emitted by the optical line terminal (OLT).

11. A network according to claim 9, **characterized in that** the disturbing signal is emitted by an optical signal transmitter (T) and injected into the optical line from the optical line terminal to the first splitter.

12. A network according to claim 9, **characterized in that** the disturbing signal is emitted by an optical signal transmitter (T) and injected into a second optical input line from of the first splitter (SP).

13. A network according to claim 9, **characterized in that** the optical signal transmitter (T) is a light emitting diode, a super luminescent diode or a semiconductor optical amplifier.
